# EUROPÄISCHE PATENTSCHRIFT

(11) **EP 2 390 137 B1**
(45) Veröffentlichungstag und Bekanntmachung des Hinweises auf die Patenterteilung: **03.05.2017**
(21) Anmeldenummer: 11167809.0
(22) Anmeldetag: 27.05.2011
(51) Int. Cl.: B60Q 1/26, F21S 8/10, F21V 7/00, F21S 8/12

(54) **Beleuchtungsvorrichtung für Fahrzeuge**
Illumination device for vehicles
Dispositif d'éclairage pour véhicules

(30) Priorität: 28.05.2010 DE 102010021939
(43) Veröffentlichungstag der Anmeldung: 30.11.2011
(73) Patentinhaber: Hella KGaA Hueck & Co., 59552 Lippstadt (DE)
(72) Erfinder: Mügge, Martin, 59590 Geseke (DE); Hohmann, Carsten, 59581 Warstein (DE)

(56) Entgegenhaltungen:
- EP-A1- 1 916 471
- EP-A2- 2 159 477
- DE-A1-102006 036 977
- DE-A1-102008 029 450
- JP-A- 2009 181 763
- JP-A- 2010 015 744
- US-A1- 2004 047 161
- US-A1- 2005 078 486
- US-B1- 7 029 152

## Beschreibung

Die Erfindung betrifft eine Beleuchtungsvorrichtung für Fahrzeuge nach dem Oberbegriff des Patentanspruchs 1.

Aus der DE 10 2008 038 668 A1 ist eine Beleuchtungsvorrichtung für Fahrzeuge bekannt, die eine Anzahl von Lichtquellen und eine denselben zugeordnete Optikeinheit aufweist. Die Optikeinheit weist zum einen jeweils einer Lichtquelle zugeordnete stangenförmige Lichtleiter auf, die sich jeweils quer zu einer Hauptabstrahlrichtung der Beleuchtungsvorrichtung erstrecken. Ferner weist die Optikeinheit einen Reflektor auf, dessen Reflektorflächen in Hauptabstrahlrichtung hinter den Lichtleitern angeordnet sind. Da die Lichtleiter prismenförmige Auskoppelelemente auf einer Vorderseite aufweisen, wird das in die Lichtleiter eingekoppelte Licht entgegen der Hauptabstrahlrichtung nach hinten zu der Reflektorfläche ausgekoppelt, von der sie in Hauptabstrahlrichtung an den Lichtleitern vorbei zur Erzeugung einer Lichtfunktion reflektiert werden. Hierdurch lässt sich die leuchtende Fläche an einer die Beleuchtungsvorrichtung abdeckenden Abschlussscheibe wesentlich erhöhen, so dass die gesetzliche Vorgabe erfüllt wird, wonach in einem Betriebszustand der Beleuchtungsvorrichtung mindestens 60 % der die Beleuchtungsvorrichtung abdeckenden Abschlussscheibe im Betriebszustand als eine leuchtende Fläche ausgebildet sein muss.

Aus der US 2004/047161 A1 ist eine Beleuchtungsvorrichtung für Fahrzeuge bekannt, bei der ein von der Lichtquelle abgestrahltes Licht mittels eines Lichtleiters umgelenkt wird und dann in Hauptabstrahlrichtung in die Umgebung austritt. Gegenüberliegende spiegelnde Flächen, wobei ein Spiegel teildurchlässig ist, ist aus dieser Druckschrift nicht bekannt.

Aus der EP 1 916 471 A1 ist eine Beleuchtungsvorrichtung für Fahrzeuge mit einer Lichtquelle und einer Optikeinheit bekannt, die aus einem vorderen Spiegel und einem in hinteren Spiegel besteht. Der vordere Spiegel ist teildurchlässig ausgebildet, so dass in den Zwischenraum zwischen dem vorderen Spiegel und dem hinteren Spiegel eingekoppeltes Licht an den vorderen Spiegel zum einen in Hauptabstrahlrichtung abgestrahlt und zum anderen entgegen der Hauptabstrahlrichtung reflektiert wird, so dass eine Abstrahlung dieses weiter reflektierten Lichtbündels seitlich versetzt erfolgen kann. Die Lichtquelle ist so positioniert, dass das Licht in den Zwischenraum zwischen dem vorderen Spiegel und dem hinteren Spiegel eintritt. Da das Licht nur durch den vorderen Spiegel in die Umgebung abgestrahlt wird, kann nur eine relativ schwache Signalfunktion erzeugt werden.

Aus der US 2005/078486 ist eine Beleuchtungsvorrichtung mit einer Spiegeleinrichtung enthaltend einen vorderen Spiegel und einen hinteren Spiegel bekannt, wobei eine Lichtquelle in Hauptabstrahlrichtung hinter der Spiegeleinrichtung angeordnet ist.

Aus der JP 2009 181763 A ist eine Beleuchtungsvorrichtung enthaltend eine Lichtquelle sowie einem vorderen Spiegel und einem hinterem Spiegel bekannt. Der vordere Spiegel kann eine halbdurchlässige Oberfläche aufweisen. In der Mitte weist der vordere Spiegel eine Öffnung auf, so dass von einer am hinteren Spiegel angeordneten Lichtquelle abgestrahltes Licht direkt durch die Öffnung und nach Mehrfachreflexion an Innenflächen des vorderen und hinteren Spiegels indirekt durch die Öffnung des vorderen Spiegels austreten kann.

Aufgabe der vorliegenden Erfindung ist es, eine Beleuchtungsvorrichtung für Fahrzeuge derart weiterzubilden, dass das Licht über eine ausreichend große leuchtende Fläche abgestrahlt wird, wobei ein dreidimensionales Ausleuchtbild mit einem großen Tiefeneindruck erzeugt wird, und eine relativ lichtstarke Lichtfunktion erzeugt wird.

Zur Lösung dieser Aufgabe weist die Erfindung die Merkmale des Patentanspruchs 1 auf.

Der besondere Vorteil der Erfindung besteht darin, dass durch das Vorsehen von zwei beabstandet zueinander angeordneten Spiegeln, deren Spiegelflächen zueinander gekehrt angeordnet sind und wobei die Spiegelfläche eines in Hauptabstrahlrichtung gesehen vorderen Spiegels teildurchlässig ausgebildet ist, auf einfache Weise ein vergrößerter Ausleuchtbereich gewährleistet ist. Die hierdurch gebildete Spiegeleinrichtung wirkt als ein "Spiegeltunnel" zur Erzeugung eines "Tunnellichtes", das ein Erscheinungsbild der Beleuchtungsvorrichtung mit Tiefenwirkung ermöglicht. Ein besonderer dekorativer Effekt ergibt sich daraus, dass sich das Erscheinungsbild der Beleuchtungsvorrichtung mit der Betrachtungsrichtung von vorne auf die Beleuchtungsvorrichtung ändert, das Erscheinungsbild also abhängig ist von dem Betrachtungswinkel zu der Spiegeleinrichtung. Nach der Erfindung ist eine Lichtquelle bzw. eine Lichteinheit in einem Randbereich zu der Spiegeleinrichtung angeordnet, wobei das Licht der Lichteinheit so in einen zwischen dem vorderen Spiegel und dem hinteren Spiegel angeordneten Zwischenraum eindringt, dass das Licht mehrfach an dem vorderen und hinteren Spiegel reflektiert wird. Der Zwischenraum ist vorzugsweise optikfrei und aus Luft bestehend ausgebildet und wird von den beiden Spiegeln begrenzt. Die Durchlässigkeit des vorderen Spiegels ist derart bemessen, dass nach Zurückwerfen des Lichtes mittels des hinteren Spiegels mehrere Rückreflexionen an der vorderen Spiegelfläche erfolgen können. Dadurch, dass sich die Mehrfachreflexion von der Lichteinheit weg erstreckt, wird die Kontur der Lichteinheit mittels der an entsprechenden Durchtrittsstellen des vorderen Spiegels durchgelassenen Lichtstrahlen nachgebildet. Erstreckt sich beispielsweise die Lichteinheit kreisförmig um die Spiegeleinrichtung, setzen sich zur Mittelachse der Spiegeleinrichtung voneinander abgegrenzte Kreisringe fort. Darüber hinaus kann auf relativ einfache Weise die gesetzliche Vorgabe hinsichtlich der 60-prozentigen Ausleuchtung der abschließenden Fläche im Betriebszustand der Signallichtfunktion erfüllt werden.

Nach der Erfindung erfolgt ein Durchtritt des ersten Lichtanteils an dem vorderen Spiegel an vorgegebenen Durchtrittsstellen, die in Abhängigkeit von der Kontur der Lichteinheit voneinander beabstandet sind. Vorteilhaft kann hierdurch die Leuchtform der Lichteinheit in der Spiegeleinrichtung fortgesetzt werden. An dem vorderen Spiegel werden somit voneinander abgegrenzte Leuchtflächen oder Leuchtlinien beleuchtet und nicht die gesamte Fläche des vorderen Spiegels.

Nach einer Weiterbildung der Erfindung ist der vordere Spiegel derart teildurchlässig ausgebildet, dass eine Lichtstärke des durchgelassenen ersten Teils des Lichtes mit größer werdendem Abstand zu dem Randbereich der Spiegeleinrichtung abnimmt. Werden durch die Spiegeleinrichtung beispielsweise Leuchtringe erzeugt, nimmt die Lichtstärke ausgehend von der umfangsseitig angeordneten Lichteinheit in radialer Richtung nach innen ab, so dass ein räumlicher Eindruck erzeugt wird, "Tunnellicht". Insbesondere ergibt sich hierdurch eine dreidimensionale Lichtwirkung durch die Mehrfachreflexion zwischen den Spiegelflächen, die einem Tunneleffekt gleichkommt.

Nach einer Weiterbildung der Erfindung erfolgt ein Durchtritt des ersten Lichtanteils an dem vorderen Spiegel an vorgegebenen Durchtrittsstellen, die in Abhängigkeit von der Kontur der Lichteinheit voneinander beabstandet sind. Vorteilhaft kann hierdurch die Leuchtform der Lichteinheit in der Spiegeleinrichtung fortgesetzt werden. An dem vorderen Spiegel werden somit voneinander abgegrenzte Leuchtflächen oder Leuchtlinien beleuchtet und nicht die gesamte Fläche des vorderen Spiegels.

Nach einer Weiterbildung der Erfindung können der hintere Spiegel und der vordere Spiegel eben und/oder konvexförmig und/oder konkavförmig ausgebildet sein. Hierdurch lassen sich unterschiedliche stilistische Effekte erzielen.

Nach einer Weiterbildung der Erfindung ist der Lichtquelle ein Lichtführungsmittel zugeordnet zur Umlenkung zumindest eines von der Lichtquelle abgesandten teilweisen Lichtbündels in Richtung der Spiegeleinrichtung. Vorteilhaft braucht die Lichtquelle somit nicht auf die Spiegeleinrichtung ausgerichtet sein, sondern kann zur Erzeugung der Lichtfunktion (Signalfunktion) unter Zuhilfenahme der Lichtführungsmittel eine relativ lichtstarke Lichtfunktion erzeugen. Vorteilhaft kann hier beispielsweise eine Bremslicht- oder Blinklichtfunktion erzeugt werden. Die Lichtführungsmittel bewirken darüber hinaus, dass ein Teillichtbündel in den Zwischenraum der Spiegeleinrichtung eingekoppelt wird, um die Ausleuchtungsfläche der Signalfunktion zu erhöhen.

Nach einer Weiterbildung der Erfindung weist der hintere Spiegel mindestens eine Durchbrechung oder unverspiegelte Bereiche auf, so dass bei Zuordnung einer weiteren Lichtquelle die teildurchlässige vordere Spiegelfläche zur Abstrahlung eines weiteren Lichtbündels genutzt werden kann. Dieses weitere Lichtbündel kann zur Erzeugung der gleichen Lichtfunktion wie die an den Spiegelflächen mehrfach reflektierten Lichtstrahlen dienen oder zur Erzeugung einer zweiten Lichtfunktion. Vorteilhaft kann somit die Kompaktheit der Beleuchtungsvorrichtung erhöht werden.

Nach einer Weiterbildung der Erfindung ist das Lichtführungsmittel der ersten Lichteinheit derart angeordnet, dass es in den Zwischenraum der Spiegeleinrichtung eintaucht. Aus dem eintauchenden Teil wird in der Regel das an der Spiegeleinrichtung mehrfach zu reflektierende Licht abgegeben. Vorteilhaft ist somit ein Teil des Lichtführungsmittels durch den vorderen Spiegel verdeckt angeordnet, was die Einsehbarkeit auf die erste Lichteinheit beschränkt.

Ausführungsbeispiele der Erfindung werden nachfolgend anhand der Zeichnungen näher erläutert.

Es zeigen:
- Fig. 1: einen Schnitt durch eine Beleuchtungsvorrichtung mit einer Spiegeleinrichtung und einer umfangsseitig angeordneten Lichteinheit nach einer ersten Ausführungsform, wobei die Lichteinheit lediglich eine Lichtquelle aufweist,
- Fig. 2a: einen teilweisen Schnitt durch eine Beleuchtungsvorrichtung nach einer zweiten Ausführungsform, die randseitig eine zur Hauptabstrahlrichtung ausgerichtete Lichtquelle und einen Reflektor als Lichtführungsmittel aufweist,
- Fig. 2b: einen teilweisen Schnitt durch eine Beleuchtungsvorrichtung nach einer dritten Ausführungsform, die randseitig eine zur Hauptabstrahlrichtung ausgerichtete Lichtquelle und eine Frennel-Linse als Lichtführungsmittel aufweist,
- Fig. 2c: einen teilweisen Schnitt durch eine Beleuchtungsvorrichtung nach einer vierten Ausführungsform, die randseitig eine zur Hauptabstrahlrichtung ausgerichtete Lichtquelle und einen Lichtleiter als Lichtführungsmittel aufweist,
- Fig. 3a: einen teilweisen Schnitt durch eine Beleuchtungsvorrichtung nach einer fünften Ausführungsform, die randseitig eine quer zur Hauptabstrahlrichtung ausgerichtete Lichtquelle und einen Umlenkreflektor als Lichtführungsmittel aufweist,
- Fig. 3b: einen teilweisen Schnitt durch eine Beleuchtungsvorrichtung nach einer sechsten Ausführungsform, die randseitig eine quer zur Hauptabstrahlrichtung ausgerichtete Lichtquelle und einen in einen Zwischenraum der Spiegeleinrichtung eintauchenden Reflektor als Lichtführungsmittel aufweist,
- Fig. 3c: einen teilweisen Schnitt durch eine Beleuchtungsvorrichtung nach einer siebten Ausführungsform, die randseitig eine quer zur Hauptabstrahlrichtung ausgerichtete Lichtquelle und einen teilweise in den Zwischenraum eintauchenden Lichtleiter als Lichtführungsmittel aufweist,
- Fig. 4a: eine schematische Vorderansicht einer Beleuchtungsvorrichtung nach einer achten Ausführungsform mit einer Spiegeleinrichtung und an gegenüberliegenden Seiten langgestreckt verlaufende Lichteinheiten,
- Fig. 4b: einen Schnitt durch die Beleuchtungsvorrichtung gemäß Figur 4a und
- Fig. 5: einen teilweisen Schnitt durch einen Randbereich einer Beleuchtungsvorrichtung nach einer neunten Ausführungsform, wobei ein hinterer Spiegel der Spiegeleinrichtung Durchbrechungen aufweist für den Durchtritt von Lichtstrahlen einer rückwärtig angeordneten zweiten Lichteinheit.

Eine erfindungsgemäße Beleuchtungsvorrichtung kann für Fahrzeuge im Heck- oder Bugbereich eingesetzt werden, vorzugsweise zur Erzeugung von Signalfunktionen, wie beispielsweise Schluss-, Positions-, Seitenmarkierungs-, Brems-, Blinklicht.

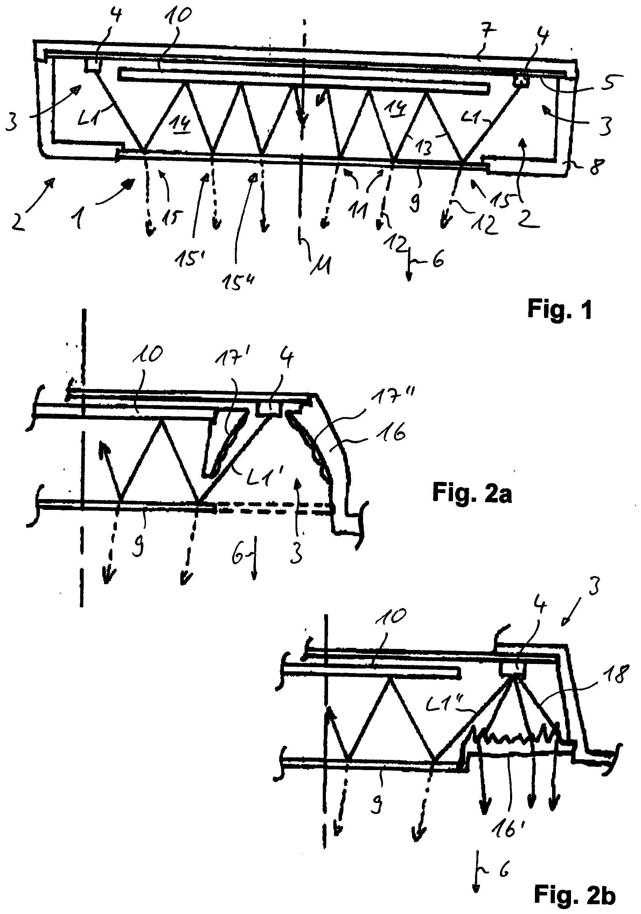

Nach einer nicht von den Patentansprüchen umfassten ersten Ausführungsform der Beleuchtungsvorrichtung gemäß Figur 1 ist eine als Spiegeleinrichtung 1 ausgebildete Optikeinheit sowie eine sich ringförmig an einem Randbereich 2 der Spiegeleinrichtung 1 umlaufende Lichteinheit 3 vorgesehen. Die Lichteinheit 3 weist eine Anzahl von Lichtquellen 4 (LED-Lichtquellen) auf, die auf einer Leiterplatte 5 angeordnet sind. Die Leiterplatte 5 erstreckt sich in Hauptabstrahlrichtung 6 der Beleuchtungsvorrichtung hinter der Spiegeleinrichtung 1. Die LED-Lichtquellen 4 sind in einem Abstand zueinander angeordnet und der Kontur eines Umfangsrandes der Spiegeleinrichtung 1 folgend positioniert.

Die Leiterplatte 5 ist in einer Gehäuseplatte 7 eingefasst, von der sich ein Rahmen 8 erhebt, der in einem mittleren Bereich einen vorderen Spiegel 9 der Spiegeleinrichtung 1 einfasst. In Hauptabstrahlrichtung 6 hinter dem vorderen Spiegel 9 ist ein hinterer Spiegel 10 angeordnet, der im Wesentlichen in Höhe der LED-Lichtquellen 4 angeordnet ist.

Während der Rahmen 8 nicht lichtdurchlässig ist, ist der vordere Spiegel 9 teillichtdurchlässig, so dass ein von der Lichteinheit 3 abgestrahltes Lichtbündel L1 an einer Auftreffstelle 11 des vorderen Spiegels 9 mit einem ersten Teil 12 (Lichtanteil) in Hauptabstrahlrichtung 6 durch den vorderen Spiegel 9 hindurchtritt und ein zweiter Teil 13 (Lichtanteil) von dem vorderen Spiegel 9 in Richtung des hinteren Spiegels 10 reflektiert wird. Wie aus Figur 1 zu ersehen ist, erfolgt eine Mehrfachreflexion zwischen zueinander gekehrten Spiegelflächen des vorderen Spiegels 9 und des hinteren Spiegels 10, so dass das in einen zwischen den vorderen Spiegel 9 und den hinteren Spiegel 10 verlaufender Zwischenraum 14 der Spiegeleinrichtung eingekoppelte Licht über eine relativ große Ausleuchtfläche des vorderen Spiegels 9, die gleich oder kleiner sein kann als die Fläche des vorderen Spiegels 9, abgestrahlt wird.

Der Grad der Teildurchlässigkeit des Spiegels 9 ist vorzugsweise über die gesamte Fläche gleich ausgebildet, so dass die Lichtstärke des an den Durchtrittsstellen 11 abgestrahlten Lichtes 12 von dem Randbereich 2 der Spiegeleinrichtung 1 zu einer Mittelachse M derselben abnimmt. Hierdurch ergibt sich eine verbesserte Tiefenwirkung, so dass die Beleuchtungsvorrichtung Licht für eine Signalfunktion mit Tunnellichteffekt abstrahlt.

Im vorliegenden Ausführungsbeispiel ist der Lichteintrittswinkelbereich des seitlich in den Zwischenraum 14 der Spiegeleinrichtung 1 eingekoppelten Lichtes L1 so gewählt, dass an den Durchtrittsstellen 11 die Verteilung der LED-Lichtquellen 4 folgende Leuchtlinien entstehende, die in einem radialen Abstand zueinander angeordnet sind. Erstrecken sich die Lichtquellen 4 beispielsweise kreisförmig um die scheibenförmig angeordnete Spiegeleinrichtung 1, entstehen kreisförmige Leuchtlinien 15, 15', 15", deren Lichtstärke in radialer Richtung sprungartig nach innen abnimmt.

Nach einer nicht dargestellten alternativen Ausführungsform können die Leuchtlinien 15, 15', 15" auch relativ breit ausgebildet sein, wobei gegebenenfalls benachbarte Leuchtlinien, 15, 15', 15" ineinander übergehen, so dass die Lichtstärke in radialer Richtung nach innen kontinuierlich abnimmt. Die Leuchtlinien würden in diesem Fall in sogenannte Leuchtflächen übergehen.

Es versteht sich, dass statt Leuchtlinien und Leuchtflächen auch lediglich Leuchtpunkte an dem vorderen Spiegel 9 erzeugbar sind. Die Verteilung der Leuchtpunkte, Leuchtlinien bzw. Leuchtflächen ist abhängig von der Anordnung der Lichtquellen 4. Sie können beispielsweise vieleckförmig, dreieckförmig, bogenförmig, ellipsoidförmig oder wie oben dargestellt kreisförmig ausgebildet sein.

Nach einer nicht dargestellten alternativen Ausführungsform können der vordere Spiegel 9 und-/oder der hintere Spiegel 10 auch statt eben - wie in Figur 1 - auch konvexförmig oder konkavförmig ausgebildet sein. Hierbei können unterschiedlich geformte vordere Spiegel 9 und hintere Spiegel 10 beliebig miteinander kombiniert werden. Insbesondere ist es auch möglich, dass der vordere Spiegel 9 und/oder der hintere Spiegel 10 auch teilweise eben und/oder konvexförmig und/oder konkavförmig ausgebildet sind. Die Beleuchtungsvorrichtung gemäß Figur 1 eignet sich insbesondere für eine Schlusslicht- oder Positionslicht- oder Seitenmarkierungslichtfunktion.

Nach weiteren Ausführungsformen der Erfindung gemäß den Figuren 2a bis 2c kann die erste Lichteinheit 3 neben der Lichtquelle 4 zusätzlich Lichtführungsmittel 16 aufweisen, wobei die Lichtquelle 4 in Hauptabstrahlrichtung 6 ausgerichtet ist und die Lichtführungsmittel 16 im Wesentlichen in Hauptabstrahlrichtung 6 vor der Lichtquelle 4 angeordnet sind. Diese Beleuchtungsvorrichtungen ermöglichen eine höhere Lichtstärke, so dass die Beleuchtungsvorrichtung auch für Bremslicht- oder Blinklichtfunktionen einsetzbar ist.

Nach der Ausführungsform der Beleuchtungsvorrichtung gemäß Figur 2a ist das Lichtführungsmittel 16 als ein Reflektor ausgebildet, wobei eine der Spiegeleinrichtung 1 zugewandte Reflektorfläche 17' vergleichsweise zu der äußeren Reflektorfläche 17" verkürzt ausgebildet ist, so dass ein Lichtbündel L1' direkt auf den vorderen Spiegel 9 treffen kann.

Gleiche Bauteile bzw. Bauteilfunktionen sind mit den gleichen Bezugszeichen versehen.

Die Lichteinheit 3 bildet den Hauptteil der Beleuchtungsvorrichtung, die in Hauptabstrahlrichtung 6 den größten Lichtstrom abgibt. Ein Teil L1' des abgegebenen Lichtbündels wird in die seitlich benachbart zu der Lichteinheit 3 angeordnete Spiegeleinrichtung 1 eingekoppelt.

Nach einer weiteren Ausführungsform der Beleuchtungsvorrichtung gemäß Figur 2b ist anstelle eines Reflektors 16 eine Fresnel-Linse 16' vorgesehen, die zwischen einem Rahmen und dem vorderen Spiegel 9 angeordnet ist. Während ein Hauptlichtstrom 18 über die Fresnel-Linse 16' in Hauptabstrahlrichtung 6 abgestrahlt wird, trifft ein Teillichtbündel L1' seitlich versetzt zu der Fresnel-Linse 16' auf eine Innenseite des vorderen Spiegels 9 und wird dann dort teilweise durchgelassen bzw. teilweise reflektiert.

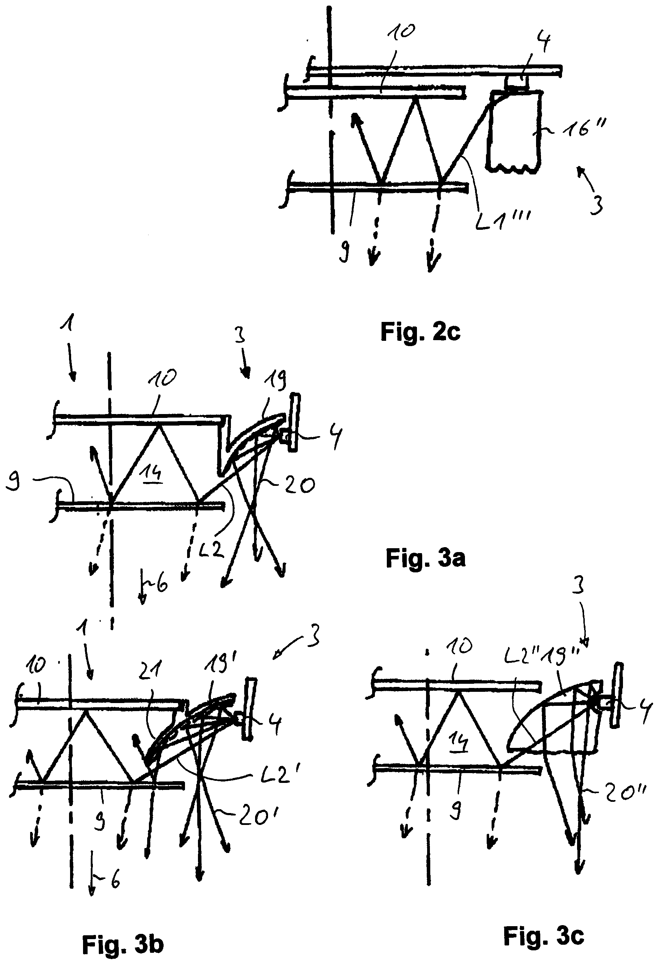

Nach einer weiteren Ausführungsform der Beleuchtungsvorrichtung gemäß Figur 2c ist in Hauptabstrahlrichtung 6 vor der Lichtquelle 4 ein Lichtleiter 16" angeordnet, aus dem über die Mantelfläche seitlich das für die Spiegeleinrichtung 1 vorgesehene Lichtbündel L1'" ausgekoppelt wird. Hierzu können prismatische Optikflächen genutzt werden, oder der Lichtleiter besitzt eine seitliche Auskoppelfläche.

Nach weiteren Ausführungsformen der Beleuchtungsvorrichtung gemäß den Figuren 3a, 3b und 3c können Lichteinheiten 3 am Randbereich 2 der Spiegeleinrichtung 1 angeordnet sein, bei denen die Lichtquelle 4 quer zur Hauptabstrahlrichtung 6 orientiert angeordnet sind und wobei zwischen der Lichtquelle 4 und der Stirnfläche der Spiegeleinrichtung 1 als Lichtführungsmittel 19, 19' ein Reflektor oder ein Lichtleiter 19" angeordnet sein kann.

Wie aus Figur 3a zu ersehen, kann der Reflektor 19 an dem hinteren Spiegel 10 angesetzt sein und nur so weit den Zwischenraum 14 abdecken, dass von der Lichtquelle 4 direktes abgestrahltes Licht L2 auf den vorderen Spiegel 9 treffen kann. Ein weiteres Lichtbündel 20 höheren Lichtstroms wird an dem Umlenkreflektor 19' so reflektiert, dass es in Hauptabstrahlrichtung 6 zur Erzeugung der Signallichtfunktion umgelenkt wird.

In der Ausführungsform gemäß Figur 3b reicht der Reflektor 19' in den Zwischenraum der Spiegeleinrichtung 1 ein, so dass zusätzlich ein Teil des von dem eintauchenden Abschnitts 21 des Reflektors 19' reflektiertes Lichtbündel mit für die innerhalb für die Spiegeleinrichtung 1 stattfindenden Mehrfachreflexion genutzt werden kann. Der eintauchende Teil 21 des Reflektors 19' ist durch den vorderen Spiegel 9 abgedeckt, so dass nur ein Teil des Reflektors 19' von außen sichtbar ist. Neben dem Lichtbündel L2', das in die Spiegeleinrichtung 1 eingekoppelt wird, wird ein weiteres Lichtbündel 20' direkt in Hauptabstrahlrichtung 6 zur Erzeugung der Lichtfunktion abgestrahlt Nach der Ausführungsform gemäß Figur 3c ist ein massiver Lichtleiter als Lichtführungsmittel 19" ausgebildet, der teilweise in den Zwischenraum 14 der Spiegeleinrichtung 1 eintaucht. Wie bei der Ausführungsform gemäß Figur 3b wird ein Lichtbündel L2" in die Spiegeleinrichtung 1 eingekoppelt, während ein weiteres Lichtbündel 20" in Hauptabstrahlrichtung 6 aus dem Lichtleiter 19" ausgekoppelt wird. Der Lichtleiter 19" weist auf einer in Hauptabstrahlrichtung 6 hinten angeordneten Rückseite eine verspiegelte Fläche auf, so dass das Licht 20" nach vorne abgestrahlt wird.

Nach einer nicht von den Patentansprüchen umfassten und nicht dargestellten Ausführungsform der Erfindung kann statt der Teilabdeckung der Lichtführungsmittel 19, 19', 19" in den Figuren 3b, 3c auch eine komplette Abdeckung durch den teiltransparenten Spiegel 9 erfolgen.

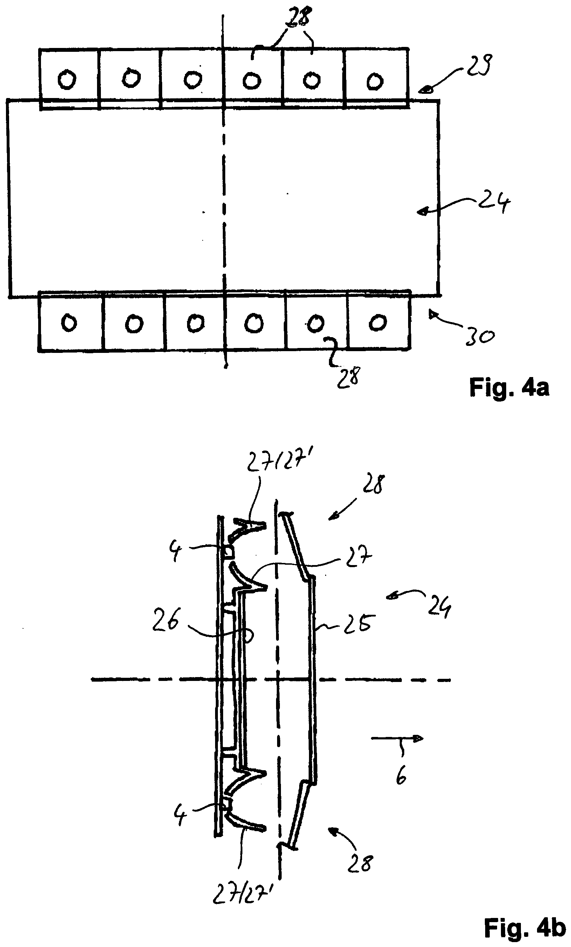

Nach einer weiteren Ausführungsform der Erfindung gemäß den Figuren 4a und 4b kann statt einer umlaufenden Anordnung von Lichtquellen um die Spiegeleinrichtung auch eine rechteckförmige Spiegeleinrichtung 24 vorgesehen sein, die in Übereinstimmung zu den vorhergehenden Ausführungsbeispielen einen teildurchlässigen vorderen Spiegel 25 und einen nicht durchlässigen hinteren Spiegel 26 aufweist. Im Unterschied zu den vorhergehenden Ausführungsbeispielen erstrecken sich jeweils aus einer Lichtquelle 4 und einem Reflektor 27 bestehende Lichteinheiten 28 reihenförmig und gradlinig entlang einer Oberseite 29 und einer Unterseite 30 der Spiegeleinrichtung 24. Die Lichteinheiten 28 dienen zur Erzeugung einer Schluss-/Bremslichtfunktion. Während die Fläche der Lichteinheiten 28 beispielsweise 48cm² betragen kann, nimmt die Fläche der dazwischen angeordneten Spiegeleinrichtung 24 120cm² ein. Die 60-Prozent-Anforderung hinsichtlich der zu beleuchtenden Fläche währe somit nicht gegeben, wenn nicht durch Einkopplung des Lichtes vermittels der äußeren Halbschale 27' des Reflektors 27 ein Lichtbündel in die Spiegeleinrichtung 24 eingekoppelt würde und dort nach Mehrfachreflexion in Hauptabstrahlrichtung 6 durch den vorderen Spiegel 25 austreten würde, wie bei den oberen Ausführungsbeispielen bereits beschrieben.

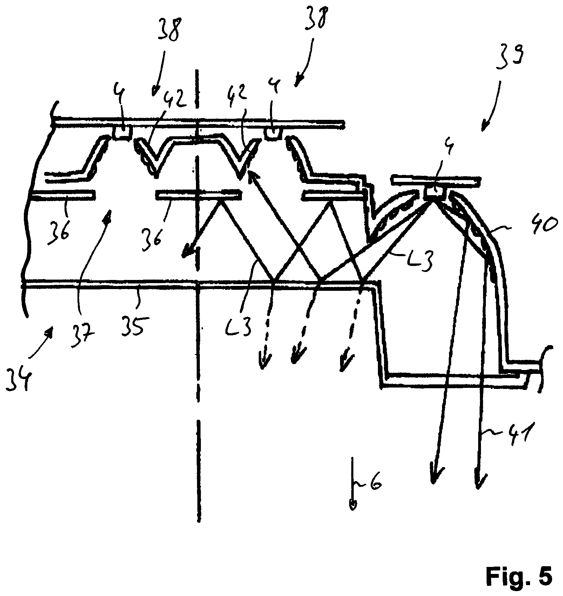

Nach einem weiteren Ausführungsbeispiel der Erfindung gemäß Figur 5 ist eine Spiegeleinrichtung 34 vorgesehen, die zum einen eine teilverspiegelte bzw. teildurchlässige Vorderseite 35 und einen innenseitig verspiegelte Rückseite 36 aufweist, wobei die Rückseite 36 Durchbrechungen 37 aufweist, die jeweils einer zweiten Lichteinheit 38 zugeordnet sind. Während die erste Lichteinheit 39 bestehend aus der Lichtquelle 4 und einem Reflektor 40 - wie bei den vorhergehenden Ausführungsbeispielen - zum einen Licht 41 direkt in Hauptabstrahlrichtung 6 zur Erzeugung einer ersten Lichtfunktion sowie zum anderen ein Lichtbündel L3 seitlich in die Spiegeleinrichtung 34 abstrahlt, strahlen die zweiten Lichteinheiten 38, die jeweils die Lichtquelle 4 und einen Reflektor 42 aufweisen, lediglich Licht in Hauptabstrahlrichtung 6 ab, das über die teilverspiegelte Vorderseite 35 austritt. Die zweite Lichteinheit 38 kann so angesteuert sein, dass sie zusammen mit der randseitigen ersten Lichteinheit 39 zur Bildung der ersten Lichtfunktion dient. Alternativ kann die innere zweite Lichteinheit 38 auch eine zweite Lichtfunktion erzeugen, beispielsweise eine gelbe Blinklichtfunktion, während die ersten Lichteinheiten 39 zur Erzeugung einer Schlusslichtfunktion dienen. Beide Signallichtfunktionen können die gleiche oder eine unterschiedliche Signalfarbe aufweisen. Alternativ kann die zweite Lichteinheit 38 auch eine Glühlampe als Lichtquelle aufweisen.

Nach einer nicht dargestellten alternativen Ausführungsform können statt der Durchbrüche 37 auch unverspiegelte Scheiben oder optikfreie oder mit Optikelementen versehene lichtdurchlässige Scheiben vorgesehen sein.

Die Spiegeleinrichtung kann kreisförmig, prismenförmig, rechteckförmig etc. ausgeführt sein, je nachdem wie die Karosserieöffnung für die Beleuchtungsvorrichtung vorgesehen ist.

Es versteht sich, dass die vorstehend genannten Merkmale der Ausführungsformen für sich oder zu mehreren in beliebiger Kombination Verwendung finden können. Die beschriebenen Ausführungsbeispiele sind nicht als abschließende Aufzählung zu verstehen, sondern haben vielmehr beispielhaften Charakter für die Schilderung der Erfindung.

**Bezugszeichenliste**

| | | | |
|---|---|---|---|
| 1 | Spiegeleinrichtung | 35 | Vorderseite |
| 2 | Randbereich | 36 | Rückseite |
| 3 | Lichteinheit | 37 | Durchbrechungen |
| 4 | Lichtquelle | 38 | zweite Lichteinheit |
| 5 | Leiterplatte | 39 | erste Lichteinheit |
| 6 | Hauptabstrahlrichtung | 40 | Reflektor |
| 7 | gh | 41 | Licht |
| 8 | Rahmen | 42 | Reflektor |
| 9 | vorderer Spiegel | | |
| 10 | hinterer Spiegel | L1, L1', L1" | Lichtbündel |
| 11 | Auftreffstelle | L2, L2', L2" | Lichtbündel |
| 12 | erster Teil | L3 | Lichtbündel |
| 13 | zweiter Teil | M | Mittelachse |
| 14 | Zwischenraum | | |
| 15, 15', 15" | Leuchtlinie | | |
| 16, 16', 16' | Lichtführungsmittel | | |
| 17 | Reflektorfläche | | |
| 18 | Lichtstrom | | |
| 19, 19', 19" | Reflektor/Lichtleiter | | |
| 20, 20', 20" | Lichtbündel | | |
| 21 | Abschnitt | | |
| 24 | Spiegeleinrichtung | | |
| 25 | vorderer Spiegel | | |
| 26 | hinterer Spiegel | | |
| 27, 27' | Reflektor | | |
| 28 | Lichteinheiten | | |
| 29 | Oberseite | | |
| 30 | Unterseite | | |
| 34 | Spiegeleinrichtung | | |

## Patentansprüche

1. Beleuchtungsvorrichtung für Fahrzeuge mit einer Licht abstrahlenden Lichtquelle (4) und mit einer der Lichtquelle (4) zugeordneten Optikeinheit, mittels derer das von der Lichtquelle (4) ausgesandte Licht entgegen und in Richtung einer Hauptabstrahlrichtung (6) umlenkbar ist, wobei
- die Optikeinheit eine Spiegeleinrichtung (1, 24, 34) mit einem vorderen Spiegel (9, 25, 35) und einem in Hauptabstrahlrichtung (6) hinter demselben angeordneten Spiegel (10, 26, 36) aufweist, zwischen denen das Licht hin und her reflektierbar ist, wobei der vordere Spiegel (9, 25, 35) teildurchlässig ausgebildet ist, so dass ein erster Teil (12) des auf den vorderen Spiegel (9, 25, 35) treffenden Lichtbündels (L1', L1", L2, L2', L2", L3) in Hauptabstrahlrichtung (6) durchtritt und ein zweiter Teil (13) des auf den vorderen Spiegel (9, 25, 35) treffenden Lichtbündels (L1', L1", L2, L2', L2", L3) in Richtung des hinteren Spiegels (10, 26, 36) reflektiert wird,
- die Lichtquelle (4) in einem Randbereich (2) der Spiegeleinrichtung (1, 24, 34) positioniert ist
- ein von der Lichtquelle (4) abgestrahltes Lichtbündel (L1', L1", L2, L2', L2", L3) in einem zwischen den vorderen Spiegel (9, 25, 35) und dem hinteren Spiegel (10, 26, 36) gelegenen Zwischenraum (14) eintritt,
**dadurch gekennzeichnet, dass**
- der Abstand zwischen dem vorderen Spiegel (6) und dem hinteren Spiegel (10) derart gewählt ist und/oder das seitlich in die Spiegeleinrichtung (1) eintretende Lichtbündel (L1', L1", L2, L2', L2", L3) derart gerichtet ist, dass der erste Teil (12) des Lichtbündels (L1', L1", L2, L2', L2", L3) an Durchtrittsstellen (11) des vorderen Spiegels (9, 25, 35) voneinander beabstandete Leuchtpunkte und/oder Leuchtlinien (15, 15', 15") und/oder Leuchtflächen bildet, und
- die Lichtquelle (4) ein weiteres Lichtbündel (20) im Vergleich zu dem in dem Zwischenraum (14) eingekoppelten Lichtbündel (L1', L1 ", L2, L2', L2", L3) höheren Lichtstroms in Hauptabstrahlrichtung (6) zur Erzeugung einer Signallichtfunktion abstrahlt.

2. Beleuchtungsvorrichtung nach Anspruch 1, **dadurch gekennzeichnet, dass** der vordere Spiegel (9, 25, 35) derart teildurchlässig ausgebildet ist, dass eine Lichtstärke des durchgelassenen ersten Teils (12) des Lichtes (L1', L1", L2, L2', L2", L3) mit größer werdendem Abstand zu dem Randbereich (2) der Spiegeleinrichtung (1, 24, 34) abnimmt.

3. Beleuchtungsvorrichtung nach Anspruch 1 oder 2, **dadurch gekennzeichnet, dass** der vordere Spiegel (9) und/oder der hintere Spiegel (10) eben und/oder konvexförmig und/oder konkavförmig ausgebildet ist.

4. Beleuchtungsvorrichtung nach einem der Ansprüche 1 bis 3, **dadurch gekennzeichnet, dass** der Lichtquelle (4) ein Lichtführungsmittel (19, 19', 19") zugeordnet ist zur Umlenkung zumindest eines von der Lichtquelle (4) abgesandten teilweisen Lichtbündels in Richtung der Spiegeleinrichtung (1, 24, 34).

5. Beleuchtungsvorrichtung nach Anspruch 4, **dadurch gekennzeichnet, dass** die Lichtführungsmittel als ein Reflektor (16, 19, 19') oder als eine Linse (16') oder als ein Lichtleiter (16", 19") ausgebildet ist.

6. Beleuchtungsvorrichtung nach einem der Ansprüche 1 bis 5, **dadurch gekennzeichnet, dass** der hintere Spiegel (36) mindestens eine Durchbrechung (37) oder eine unverspiegelte Scheibe aufweist, wobei der Durchbrechung (37) bzw. der unverspiegelten Scheibe eine mit einer zweiten Lichtquelle (4) versehene zweite Lichteinheit (38) zugeordnet ist zum Erzeugen eines weiteren zweiten Lichtbündels, das durch die Durchbrechung (37) bzw. der unverspiegelten Scheibe und den vorderen Spiegel (35) abgestrahlt wird zur Erzeugung einer ersten Lichtfunktion zusammen mit der seitlich zu der Spiegeleinrichtung (34) angeordneten ersten Lichtquelle (4) einer ersten Lichteinheit (39) und/oder zur Erzeugung einer zweiten Lichtfunktion.

7. Beleuchtungsvorrichtung nach einem der Ansprüche 1 bis 6, **dadurch gekennzeichnet, dass** der Spiegeleinrichtung (1, 24, 34) seitlich im Randbereich (2) umlaufende oder teilweise umlaufende Lichtquellen (4) und/oder Lichteinheiten (3, 28, 39) zugeordnet sind.

8. Beleuchtungsvorrichtung nach einem der Ansprüche 1 bis 7, **dadurch gekennzeichnet, dass** Lichtführungsmittel (19', 19") der randseitig an der Spiegeleinrichtung (24) angeordneten Lichteinheit (3) derart angeordnet sind, dass die Lichteinheit (3) zumindest teilweise in den Zwischenraum (14) der Spiegeleinrichtung (24) eintaucht.

## Claims

1. Lighting unit for vehicles having a light emitting light source (4) and having an optic unit assigned to the light source (4), by means of which the light emitted by the light source (4) is deflectable in the direction of a main radiation direction (6) and against it, wherein
- the optic unit has a mirror device (1, 24, 34) comprising a front mirror (9, 25, 35) and a mirror (10, 26, 36) arranged in the main radiation direction (6) behind the same, between which the light is reflectable backward and forward, the front mirror (9, 25, 35) being embodied in a partially transmitting manner, so that a first part (12) of the light beam (L1', L1", L2, L2', L2",L3) hitting the front mirror (9, 25, 35) in the main radiation direction (6) passes through it and a second part (13) of the light beam (L1', L1", L2, L2', L2",L3) hitting the front mirror (9, 25, 35) is reflected in the direction of the rear mirror (10, 26, 36),
- the light source (4) is positioned in a border area (2) of the mirror device (1, 24, 34),
- a light beam (L1', L1", L2, L2', L2", L3) radiated by the light source (4) enters an intermediate space (14) situated between the front mirror (9, 25, 35) and the rear mirror (10, 26, 36),
**characterized in that**
- the distance between the front mirror (6) and the rear mirror (10) is chosen and/or the light beam (L1', L1", L2, L2', L2", L3) laterally entering the mirror device (1) is directed in a manner so that the first part (12) of the light beam (L1', L1", L2, L2', L2", L3) forms spaced apart light spots and / or light lines (15, 15', 15") on points of passage (11) of the front mirror (9, 25, 35), and
- the light source (4) radiates a further light beam (20) with a higher luminous flux, when compared to the light beam (L1', L1", L2, L2', L2", L3) coupled into the intermediate space (14), in the main radiation direction (6) for the generation of a signal light function.

2. Lighting unit according to Claim 1, **characterized in that** the front mirror (9, 25, 35) is embodied in a partially transmitting manner so that a luminous intensity of the passed through first part (12) of the light (L1', L1", L2, L2', L2", L3) decreases with an increasing distance to the border area (2) of the mirror device (1, 24, 34).

3. Lighting unit according to Claim 1 or 2, **characterized in that** the front mirror (9) and/ or the rear mirror (10) is embodied in a plane and/ or convex and/ or concave shape.

4. Lighting unit according to one of the Claims 1 to 3, **characterized in that** a light guide means (19, 19', 19") is assigned to the light source (4) for the deflection of at least one of the partial light beams radiated by the light source (4) in the direction of the mirror device (1, 24, 34).

5. Lighting unit according to Claim 4, **characterized in that** the light guide means is embodied as a reflector (16, 19, 19') or as a lens (16') or as a light guide (16", 19").

6. Lighting unit according to one of the Claims 1 to 5, **characterized in that** the rear mirror (36) has at least one point of passage (37) or one non-reflective pane, wherein a second light unit (38) with a second light source (4) is assigned to the point of passage (37) respectively the non-reflective pane to generate a further second light beam being radiated through the opening (37) respectively the non-reflective pane and the front mirror (35) for the generation of a first light function together with the first light source (4) being arranged laterally relative to the mirror device (34) of a first light unit (39) and/or for the generation of a second light function.

7. Lighting unit according to one of the Claims 1 to 6, **characterized in that** the mirror device (1, 24, 34) has circumferential or partially circumferential light sources (4) and/or light units (3, 28, 39) assigned laterally in the border area (2).

8. Lighting unit according to one of the Claims 1 to 7, **characterized in that** light guide means (19, 19') of the light unit (3) arranged laterally on the mirror device (24) are arranged in such a manner, that the light unit (3) protrudes at least partially into the intermediate space (14) of the mirror device (24).

## Revendications

1. Dispositif d'éclairage pour véhicules avec une source de lumière (4) émettant de la lumière et avec une unité optique affectée à la source de lumière (4) par laquelle la lumière émise de la source de lumière (4) peut être déviée en sens inverse et dans une direction principale de rayonnement (6),
- l'unité optique présentant un dispositif à miroir (1, 24, 34) avec un miroir avant (9, 25, 35) et un miroir (10, 26, 36) disposé derrière le même dans la direction principale de rayonnement (6) entre lesquels la lumière peut être réfléchie en va-et-vient, le miroir avant (9, 25, 35) étant partiellement translucide, de manière à ce qu'une première partie (12) du faisceau lumineux (L1', L1", L2, L2', L2", L3) atteignant le miroir avant (9, 25, 35) traverse en direction principale de rayonnement (6) et une deuxième partie (13) du faisceau lumineux (L1', L1", L2, L2', L2", L3) atteignant le miroir avant (9, 25, 35) est réfléchie dans la direction du miroir arrière (10, 26, 36),
- la source de lumière (4) étant positionnée dans une zone marginale (2) du dispositif à miroir (1, 24, 34),
- un faisceau lumineux (L1', L1", L2, L2', L2", L3) émis par la source de lumière (4) entrant dans un espace intermédiaire (14) entre le miroir avant (9, 25, 35) et le miroir arrière (10, 26, 36),
**caractérisée en ce que**
- la distance entre le miroir avant (9) et le miroir arrière (10) est choisie de telle manière et/ou le faisceau lumineux (L1', L1", L2, L2', L2", L3) entrant latéralement dans le dispositif à miroir (1) est orienté de telle manière que la première partie (12) du faisceau lumineux (L1', L1", L2, L2', L2", L3) forme des points lumineux distants l'un de l'autre et/ou des lignes lumineuses (15, 15', 15") et/ou surfaces lumineuses sur les points de passage (11) du miroir avant (9, 25, 35), et
- la source de lumière (4) émet un autre faisceau lumineux (20) à flux lumineux plus élevé comparé au faisceau lumineux (L1', L1 ", L2, L2', L2", L3) couplé dans l'espace intermédiaire (14) dans la direction principale de rayonnement (6) pour engendrer une fonction de feu de signalisation.

2. Dispositif d'éclairage selon la revendication 1, **caractérisée en ce que** le miroir avant (9, 25, 35) est réalisé partiellement translucide de telle manière qu'une intensité lumineuse de la première partie (12) passée de la lumière (L1', L1", L2, L2', L2", L3) diminue avec la distance croissante par rapport à la zone marginale (2) du dispositif à miroir (1, 24, 34).

3. Dispositif d'éclairage selon la revendication 1 ou 2, **caractérisée en ce que** le miroir avant (9) et/ou le miroir arrière (10) sont réalisés de forme convexe et/ou de forme concave.

4. Dispositif d'éclairage selon l'une des revendications 1 à 3, **caractérisée en ce qu'**un moyen de guidage de lumière (19, 19', 19") est afffecté à la source de lumière (4) pour la déviation d'au moins un faisceau lumineux partiel émis de la source de lumière (4) dans la direction du dispositif à miroir (1, 24, 34).

5. Dispositif d'éclairage selon la revendication 4, **caractérisée en ce que** les moyens de guidage de lumière sont réalisés en tant qu'un réflecteur (16, 19, 19') ou en tant qu'une lentille (16') ou en tant qu'un conducteur de lumière (16", 19").

6. Dispositif d'éclairage selon l'une des revendications 1 à 5, **caractérisée en ce que** le miroir arrière (36) présente au moins un évidement (37) ou un disque non miroité, une deuxième unité de lumière (38) pourvue d'une deuxième source de lumière (4) étant affectée à l'évidement (37) respectivement au disque non miroité pour engendrer un autre deuxième faisceau lumineux qui sera émis à travers l'évidement (37) respectivement le disque non miroité et le miroir avant (35) pour réaliser une première fonction d'éclairage ensemble avec la première source de lumière (4) disposée latéralement par rapport au dispositif à miroir (34) d'une première unité d'éclairage (39) et/ou pour engendrer une deuxième fonction d'éclairage.

7. Dispositif d'éclairage selon l'une des revendications 1 à 6, **caractérisée en ce que** dans la zone marginale (2) latérale des sources de lumière (4) et/ou unités d'éclairage (3, 28, 39) périphériques ou partiellement périphériques sont affectées au dispositif à miroir (1, 24, 34).

8. Dispositif d'éclairage selon l'une des revendications 1 à 7, **caractérisée en ce que** des moyens de guidage de lumière (19', 19") de l'unité d'éclairage (3) disposée au niveau du bord sur le dispositif à miroir (24) sont disposés de telle manière que l'unité d'éclairage (3) immerge au moins partiellement dans l'espace intermédiaire (14) du dispositif à miroir (24).
